# FASCICULE DE BREVET EUROPEEN

(11) **EP 1 941 132 B1**
(45) Date de publication et mention de la délivrance du brevet: **29.12.2010**
(21) Numéro de dépôt: 06820193.8
(22) Date de dépôt: 11.10.2006
(51) Int. Cl.: F01M 11/08, F16N 39/00

(54) **PROCEDE POUR ELIMINER LE CARBURANT CONTENU DANS DE L'HUILE DE LUBRIFICATION D'UN MOTEUR A COMBUSTION INTERNE ET MOTEUR UTILISANT UN TEL PROCEDE**
VERFAHREN ZUR ELIMINIERUNG VON IM SCHMIERÖL EINES VERBRENNUNGSMOTORS ENTHALTENEM KRAFTSTOFF UND EIN SOLCHES VERFAHREN EINSETZENDER MOTOR
METHOD FOR ELIMINATING FUEL CONTAINED IN THE LUBRICATING OIL OF AN INTERNAL COMBUSTION ENGINE AND ENGINE USING SUCH A METHOD

(30) Priorité: 11.10.2005 FR 0510403
(43) Date de publication de la demande: 09.07.2008
(73) Titulaire: Institut Français du Pétrole, 92852 Rueil Malmaison Cedex (FR)
(72) Inventeur: MONTAGNE, Xavier, F-92500 Rueil-Malmaison (FR); JEULAND, Nicolas, F-75005 Paris (FR)
(86) Numéro de dépôt international: PCT/FR2006/002292
(87) Numéro de publication internationale: WO 2007/042675

(56) Documents cités:
- FR-A- 2 803 624
- US-A- 4 458 642
- US-A- 6 053 143
- PATENT ABSTRACTS OF JAPAN vol. 2003, no. 01, 14 janvier 2003 (2003-01-14) & JP 2002 266619 A (ISUZU MOTORS LTD), 18 septembre 2002 (2002-09-18)

## Description

La présente invention se rapporte à un procédé pour éliminer le carburant contenu dans l'huile de lubrification d'un moteur à combustion interne et à un moteur utilisant un tel procédé.

Comme cela est généralement connu, un moteur à combustion interne comprend un circuit fermé de lubrification avec un carter d'huile situé dans la partie basse du bloc-moteur, une pompe à huile pour pomper l'huile contenue dans ce carter et la faire passer au travers d'un filtre à huile pour la débarrasser de ses impuretés, et éventuellement au travers d'un radiateur d'huile pour refroidir cette l'huile filtrée avant sa réintroduction dans le moteur.

L'huile de lubrification a pour objectif principal de faciliter le mouvement relatif entre deux pièces du moteur en minimisant, voire en évitant, les frottements entre ces deux pièces. Pour ce faire, cette huile permet de créer un film visqueux qui est interposé entre ces deux pièces de manière à réduire ou à éviter le contact direct entre les deux surfaces de ces pièces.

C'est notamment le cas pour le piston d'un moteur qui délimite, avec la culasse et le cylindre, une chambre de combustion dans laquelle se produit la combustion d'un mélange carburé. Ce piston coulisse dans le cylindre, avec un mouvement alternatif rectiligne, et un mince film d'huile doit être continuellement présent entre la surface extérieure du piston et la paroi du cylindre. En l'absence de ce film d'huile, il se produit un ralentissement du mouvement de ce piston par frottement dans le cylindre ainsi qu'une augmentation de la température du piston et du cylindre, ce qui entraîne un dysfonctionnement de ce moteur. Ce dysfonctionnement peut aller jusqu'au grippage de ce piston, c'est-à-dire jusqu'à son blocage dans le cylindre. Un tel grippage entraîne un arrêt brutal de fonctionnement du moteur et nécessite une étape de reconditionnement de ce moteur qui est d'un coût élevé.

Ce problème est d'autant plus préoccupant que, pour certains types de moteurs Diesel avec post-traitement des effluents de la combustion, les stratégies d'injection de carburant sont telles qu'une partie du carburant injecté est dilué dans le film d'huile. En effet, durant le cycle de fonctionnement du moteur, ce carburant est introduit dans la chambre de combustion d'une manière telle qu'il est projeté sur le film d'huile présent sur la majeure partie de l'étendue axiale de la paroi du cylindre. Ce carburant se mélange ensuite par dilution avec l'huile du film.

Cette huile contenant du carburant dilué parvient ensuite au carter d'huile, généralement par gravité sous l'effet du segment racleur prévu autour du piston, d'où elle est pompée pour être filtrée et à nouveau envoyée vers des pièces à lubrifier, notamment pour créer le film d'huile entre le piston et le cylindre. Ce film reçoit donc encore du carburant qui sera également dilué dans la pellicule d'huile. Cette huile avec une dilution de carburant encore plus importante retourne dans le carter d'huile pour y être aspirée par la pompe pour un nouveau cycle de lubrification.

Ainsi, au bout d'un certain nombre de cycles de lubrification, le taux de dilution de carburant dans l'huile est tel que le film d'huile est impossible à réaliser ou qu'il ne se forme que localement entre le piston et le cylindre ou qu'il se casse lors du mouvement du piston. De ce fait, les deux pièces sont en contact direct localement ou totalement, ce qui ralentit le mouvement du piston par frottement et augmente sa température ainsi que celle de la paroi du cylindre en entraînant à terme le grippage de ce piston.

Il est connu, notamment par le document JP 2002266619, d'éliminer le carburant contenu dans l'huile de façon à vaporiser ce carburant puis à le condenser, après vaporisation, pour le réinjecter dans le réservoir de carburant.

Cette disposition connue a pour inconvénient majeur de nécessiter un chauffage continu du mélange carburant/huile. Cela entraîne une grande dépense d'énergie pour assurer ce chauffage et oblige à maintenir constamment, pendant le fonctionnement du véhicule, une température élevée de chauffage. Ce maintien constant du chauffage du lubrifiant risque d'entraîner à terme une perte non négligeable des caractéristiques du lubrifiant, comme sa viscosité.

La présente invention se propose de remédier aux inconvénients ci-dessus grâce à un procédé qui permet d'éliminer le carburant présent dans l'huile de lubrification avant sa réintroduction dans le moteur par un chauffage de manière mesurée de l'huile et sans dépense exagérée d'énergie.

A cet effet, la présente invention concerne un procédé pour éliminer le carburant contenu dans de l'huile de lubrification d'un moteur à combustion interne comprenant un bloc moteur avec un circuit d'admission d'air pour un mélange carburé, un circuit d'échappement de gaz brûlés, un carter d'huile, des moyens de pompage de l'huile contenue dans le carter, et des moyens d'élimination du carburant dilué dans l'huile par des moyens de chauffage de ladite huile, ledit procédé consistant à éliminer, après le pompage de l'huile, le carburant dilué dans l'huile, **caractérisé en ce qu**'il consiste à chauffer, de manière intermittente, l'huile pendant une durée de 1/100 de seconde à 10 secondes pour obtenir une vaporisation du carburant contenu dans cette huile de manière à séparer ledit carburant de l'huile.

Le procédé peut consister à chauffer l'huile à une température de 150 à 350°C pour vaporiser le carburant.

Préférentiellement, le procédé peut consister à diriger le carburant traité vers le circuit d'admission du moteur.

Il peut également consister à diriger le carburant traité vers le circuit d'échappement du moteur.

L'invention concerne également un moteur à combustion interne comprenant un bloc moteur avec un circuit d'admission d'air pour un mélange carburé, un circuit d'échappement de gaz brûlés, un carter d'huile et des moyens de pompage de l'huile contenue dans le carter et des moyens d'élimination du carburant dilué dans l'huile par des moyens de chauffage de ladite huile, caractérisé en ce les moyens de chauffage comprennent des émetteurs infrarouges pour chauffer, de manière intermittente, ladite huile .

L'invention concerne également un moteur à combustion interne comprenant un bloc moteur avec un circuit d'admission d'air pour un mélange carburé, un circuit d'échappement de gaz brûlés, un carter d'huile et des moyens de pompage de l'huile contenue dans le carter et des moyens d'élimination du carburant dilué dans l'huile par des moyens de chauffage de ladite huile, caractérisé en ce les moyens de chauffage comprennent des émetteurs micro-ondes pour chauffer, de manière intermittente, ladite huile.

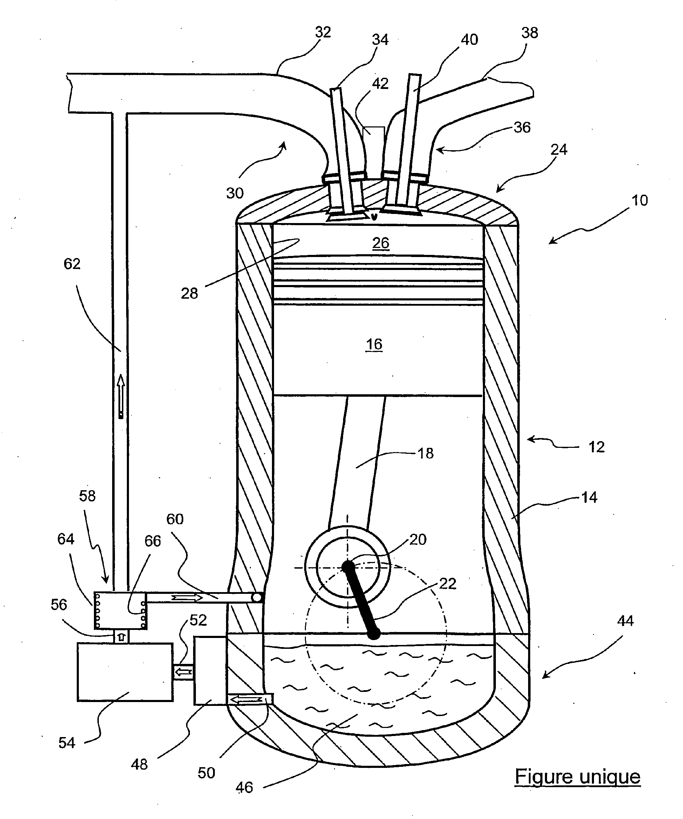

Les autres caractéristiques et avantages de l'invention apparaîtront mieux à la lecture de la description qui va suivre, donnée uniquement à titre illustratif et nullement limitatif, et en se référant au dessin unique annexé qui illustre un moteur à combustion interne utilisant le procédé selon l'invention.

Le moteur de cette figure unique comprend un bloc-moteur 10 avec un bloc-cylindres 12 comprenant au moins un cylindre 14 à l'intérieur duquel coulisse un piston 16 en un mouvement alternatif rectiligne sous l'effet d'une bielle 18 reliée à un maneton 20 d'un vilebrequin 22. Ce bloc-cylindres porte, en partie supérieure, un bloc-culasse 24 qui permet de délimiter une chambre de combustion 26 entre la partie haute du piston, la partie de la culasse en vis-à-vis du piston et la paroi 28 du cylindre 14.

Comme cela est largement connu, la culasse 24 porte des moyens d'admission 30, tels qu'une tubulure d'admission 32 dont le débouché dans la chambre de combustion 26 est contrôlé par une soupape d'admission 34. Ces moyens d'admission font partie d'un circuit d'admission d'air (non représenté) du moteur qui comprend généralement un collecteur d'admission relié aux tubulures d'admission, une conduite d'admission d'air et éventuellement, en amont du collecteur d'admission, un moyen de compression de l'air admis, comme un turbocompresseur. Cette culasse porte également des moyens d'échappement 36 de gaz brûlés avec une tubulure d'échappement 38 et une soupape d'échappement 40. Ces moyens d'échappement font aussi partie d'un circuit d'échappement de gaz brûlés (non représenté) qui comprend un collecteur d'échappement connecté aux tubulures d'échappement et une ligne d'échappement pouvant comporter des moyens de post-traitement des gaz d'échappement, comme un catalyseur. Dans le cas de la figure unique, qui montre à titre d'exemple un moteur à injection directe, la culasse porte un injecteur de carburant 42 qui permet d'introduire du carburant dans la chambre de combustion 26 afin d'y réaliser un mélange carburé.

Dans la partie basse du bloc-moteur est placé un carter 44, dit carter moteur, qui loge en partie le vilebrequin 22 et dont l'une des fonctions est d'être utilisé en tant que carter de réception de l'huile de lubrification 46 du moteur.

Ce carter porte une pompe à huile 48 avec une tubulure d'aspiration 50 qui est plongée dans l'huile 46 présente dans le carter 44 et une tubulure de refoulement 52 raccordée à un moyen de filtration de l'huile 54, ou filtre à huile. Ce filtre à huile peut être associé à un dispositif de refroidissement (non représenté) de cette huile après sa filtration. La sortie 56 de ce filtre est connectée à des moyens d'élimination 58 du carburant contenu dans cette huile. Cette élimination est réalisée en séparant le carburant de l'huile par une opération de vaporisation. Ces moyens 58 comprennent une première sortie, dite sortie d'huile 60, qui permet de réintroduire l'huile épurée, c'est-à-dire débarrassée du carburant, filtrée et éventuellement refroidie dans le bloc moteur pour assurer la lubrification des différentes pièces mobiles. Une autre sortie des moyens 58, dite sortie de carburant 62, permet soit de diriger le carburant vaporisé vers un dispositif de stockage et de traitement de vapeur de carburant, de type "canister", soit de réintroduire ce carburant traité dans le circuit d'admission d'air, tel que dans la tubulure d'admission 32 (comme illustré sur la figure) ou dans le collecteur d'admission ou dans la conduite d'admission en amont du turbocompresseur. De manière alternative, le carburant vaporisé peut être introduit dans le circuit d'échappement et plus particulièrement dans la ligne d'échappement en amont des moyens de post-traitement des gaz d'échappement.

A titre d'exemple, les moyens d'élimination 58 comprennent un boîtier 64 comportant des moyens de chauffage 66 de l'huile provenant du filtre. Ces moyens de chauffage permettent de réaliser un chauffage discontinu par rayonnement de cette huile pour vaporiser le carburant qui y est contenu. Ces moyens de chauffage, tels que des émetteurs infrarouges ou des émetteurs micro-ondes, permettent de libérer une grande quantité d'énergie pendant un délai très bref, que l'on a dénommé "flash" dans la suite de la description. En effet, l'apport d'énergie de manière discontinue permet d'obtenir des températures élevées sans une consommation excessive d'énergie. De plus, ces moyens de chauffage par rayonnement permettent d'éviter le contact de points chauds avec l'huile, ce qui empêche l'oxydation de cette huile.

Au cours de réalisation d'une campagne d'essais, le demandeur est parti de l'hypothèse selon laquelle l'huile contenant du carburant peut être amenée, à chaque flash, à une température comprise entre 150°C et 350°C et de préférence voisine de 320°C pour un moteur de type Diesel. Cette élévation de température permet la vaporisation du carburant dilué dans cette huile tout en n'altérant pas les caractéristiques physico-chimiques de cette huile. La durée des flashs et l'intervalle entre ces flashs sont déterminés par le taux de dilution du carburant dans l'huile et les conditions utilisées pour le traitement de la charge. A partir de cela, le choix de la durée et la fréquence des flashs a permis de déterminer l'énergie à utiliser ainsi que la masse de lubrifiant traitée à chaque flash. De manière avantageuse, la durée des flashs est comprise entre 1/100 seconde et 10 secondes et l'intervalle entre ces flashs peut être d'environ 6 secondes et aller au-delà des 600 secondes.

Ainsi, à partir d'un exemple d'huile avec un taux de dilution de 5 à 10% de carburant dans l'huile, le tableau ci-dessous donne le pourcentage de lubrifiant traité (% charge traitée) par rapport à la quantité globale de lubrifiant contenu dans le carter d'huile, l'énergie mise en jeu pour différentes durées de flash (de 0,01 secondes à 1 seconde) et les différents intervalles entre les flashs de 6 à 600 secondes.

| | | | | |
|---|---|---|---|---|
| **Durée flash** | **s** | 0.01 | 0.1 | 1 |
| **% charge traitée (/charge totale)** | **%** | 0.07 | 0.7 | 7 |
| **Energie dépensée** | **J** | 2400 | 24000 | 240000 |
| **Intervalle entre flashs** | **s** | 6 | 60 | 600 |

En fonctionnement, de l'huile 46 dans laquelle du carburant a été dilué est présente dans le carter 44. Cette huile est aspirée par la pompe 48, grâce à la tubulure d'aspiration 50, puis est envoyée dans le filtre 54 par la tubulure de refoulement 52. A la sortie du filtre, l'huile pénètre dans les moyens d'élimination de carburant 58 où elle est chauffée à une température comprise entre 150°C et 350°C et préférentiellement à 320°C dans le cas d'un moteur Diesel. Cette température est obtenue grâce à un ou des flashs d'énergie réalisés par les moyens de chauffage par rayonnement (émetteurs infrarouges ou émetteurs micro-ondes) contenus dans ces moyens d'élimination par séparation. Pour exemple, ces flashs sont de très courte durée, de l'ordre de 1/100 de seconde, avec des intervalles de temps entre chaque flash très brefs (environ 6 secondes). De par ce chauffage brutal et intermittent, le carburant contenu dans l'huile est vaporisé, se sépare de l'huile, puis est évacué sous forme vapeur par la sortie 62 vers la tubulure d'admission 32. L'huile débarrassée du carburant est ensuite dirigée par la sortie 60 vers le bloc-moteur pour assurer la continuité de la lubrification des différentes pièces mobiles de ce moteur.

Bien entendu et cela sans sortir du cadré de l'invention, l'opération de vaporisation du carburant présent dans l'huile par les moyens d'élimination par séparation peut être, soit permanente pour chaque fonctionnement du moteur et pendant toute la durée du fonctionnement de celui-ci, soit cyclique, comme par exemple au bout d'un certain nombre d'heures de fonctionnement du moteur et pendant une durée déterminée.

La présente invention n'est pas limitée à l'exemple de réalisation décrit ci-dessus mais englobe toutes variantes et tous équivalents.

Notamment, il peut être envisagé de refroidir à nouveau l'huile débarrassée du carburant à la sortie des moyens d'élimination et avant son introduction dans le bloc-moteur de façon à ce qu'elle atteigne sa température de fonctionnement. Il pourrait également être envisagé de ne réaliser qu'une seule opération de refroidissement de l'huile et ce après l'élimination du carburant et en ne procédant pas à l'opération de refroidissement de cette huile initialement prévue après la filtration.

## Revendications

1. Procédé pour éliminer le carburant contenu dans de l'huile de lubrification d'un moteur à combustion interne comprenant un bloc moteur (10) avec un circuit d'admission d'air pour un mélange carburé, un circuit d'échappement de gaz brûlés, un carter d'huile (44), des moyens de pompage (48) de l'huile contenue dans le carter, et des moyens d'élimination (58) du carburant dilué dans l'huile par des moyens de chauffage de ladite huile, ledit procédé consistant à éliminer, après le pompage de l'huile, le carburant dilué dans l'huile, **caractérisé en ce qu'**il consiste à chauffer, de manière intermittente, l'huile pendant une durée de 1/100 de seconde à 10 secondes pour obtenir une vaporisation du carburant contenu dans cette huile de manière à séparer ledit carburant de l'huile.

2. Procédé selon la revendication 1, **caractérisé en ce qu'**il consiste à chauffer l'huile à une température de 150 à 350°C pour vaporiser le carburant.

3. Procédé selon l'une des revendications 1 ou 2, **caractérisé en ce qu'**il consiste à diriger le carburant traité vers le circuit d'admission du moteur.

4. Procédé selon l'une des revendications 1 ou 2, **caractérisé en ce qu'**il consiste à diriger le carburant traité vers le circuit d'échappement du moteur.

5. Moteur à combustion interne comprenant un bloc moteur (10) avec un circuit d'admission d'air pour un mélange carburé, un circuit d'échappement de gaz brûles, un carter d'huile (44) et des moyens de pompage (48) de l'huile contenue dans le carter et des moyens d'élimination (58) du carburant dilué dans l'huile par des moyens de chauffage de ladite huile, caractérisé en ce les moyens de chauffage comprennent des émetteurs infrarouges (66) pour chauffer, de manière intermittente, ladite huile

6. Moteur à combustion interne comprenant un bloc moteur (10) avec un circuit d'admission d'air pour un mélange carburé, un circuit d'échappement de gaz brûlés, un carter d'huile (44) et des moyens de pompage (48) de l'huile contenue dans le carter et des moyens d'élimination (58) du carburant dilué dans l'huile par des moyens de chauffage de ladite huile, **caractérisé en ce que** les moyens de chauffage comprennent des émetteurs micro-ondes (66) pour chauffer, de manière intermittente, ladite huile.

## Claims

1. A method for eliminating the fuel contained in lubricating oil of an internal combustion engine including an engine block (10) with an air intake circuit for a carbureted mixture, a burnt gas exhaust circuit, an oil sump (44), means for pumping (48) the oil contained in the sump, and means for eliminating (58) the fuel diluted in the oil via means for heating said oil, said method consisting in eliminating, after the oil has been pumped, the fuel diluted in the oil, **characterised in that** it consists in heating the oil in an intermittent manner for a period of 1/100 of a second to 10 seconds in order to obtain a vaporisation of the fuel contained in this oil so as to separate said fuel from the oil.

2. The method according to Claim 1, **characterised in that** it consists in heating the oil to a temperature of from 150 to 350°C in order to vaporise the fuel.

3. The method according to one of claims 1 or 2, **characterised in that** it consists in directing the processed fuel to the intake circuit of the engine.

4. The method according to one of claims 1 or 2, **characterised in that** it consists in directing the processed fuel to the exhaust circuit of the engine.

5. An internal combustion engine including an engine block (10) with an air intake circuit for a carbureted mixture, a burnt gas exhaust circuit, an oil sump (44) and means for pumping (48) the oil contained in the sump and means for eliminating (58) the fuel diluted in the oil via means for heating said oil, **characterised in that** the heating means include infrared emitters (66) for heating said oil in an intermittent manner.

6. An internal combustion engine including an engine block (10) with an air intake circuit for a carbureted mixture, a burnt gas exhaust circuit, an oil sump (44) and means for pumping (48) the oil contained in the sump and means for eliminating (58) the fuel diluted in the oil via means for heating said oil, **characterised in that** the heating means include microwave emitters (66) for heating said oil in an intermittent manner.

## Patentansprüche

1. Verfahren zur Eliminierung des im Schmieröl eines Verbrennungsmotors enthaltenen Kraftstoffs, umfassend einen Motorblock (10) mit einer Luftansaugleitung für ein Kraftstoff-Luft-Gemisch, eine Abgasleitung für die verbrannten Gase, eine Ölwanne (44), Mittel zum Pumpen des in der Wanne enthaltenen Öls, und Mittel zur Entfernung des im Öl verdünnten Kraftstoffs durch Mittel zum Heizen dieses Öls, wobei das Verfahren darin besteht, den im Öl verdünnten Kraftstoff nach dem Pumpen des Öls zu entfernen, **dadurch gekennzeichnet, dass** es darin besteht, das Öl auf intermittierende Weise 1/100 Sekunde bis 10 Sekunden lang zu erhitzen, um eine Verdampfung des in diesem Öl enthaltenen Kraftstoffs zu erreichen, wodurch der Kraftstoff vom Öl getrennt wird.

2. Verfahren nach Anspruch 1, **dadurch gekennzeichnet, dass** es darin besteht, das Öl auf eine Temperatur von 150 bis 350°C zu erwärmen, um den Kraftstoff zu verdampfen.

3. Verfahren nach einem der Ansprüche 1 oder 2, **dadurch gekennzeichnet, dass** es darin besteht, den behandelten Kraftstoff zur Ansaugleitung des Motors zu leiten.

4. Verfahren nach einem der Ansprüche 1 oder 2, **dadurch gekennzeichnet, dass** es darin besteht, den behandelten Kraftstoff zur Abgasleitung des Motors zu leiten.

5. Verbrennungsmotor, umfassend einen Motorblock (10) mit einer Luftansaugleitung für ein Kraftstoff-Luft-Gemisch, eine Abgasleitung für die verbrannten Gase, eine Ölwanne (44), Mittel zum Pumpen (48) des in der Wanne enthaltenen Öls, und Mittel zur Entfernung (58) des im Öl verdünnten Kraftstoffs durch Mittel zum Heizen dieses Öls, **dadurch gekennzeichnet, dass** die Heizmittel Infrarotstrahler (66) umfassen, um das Öl auf intermittierende Weise zu heizen.

6. Verbrennungsmotor, umfassend einen Motorblock (10) mit einer Luftansaugleitung für ein Kraftstoff-Luft-Gemisch, eine Abgasleitung für die verbrannten Gase, eine Ölwanne (44), Mittel zum Pumpen (48) des in der Wanne enthaltenen Öls, und Mittel zur Entfernung (58) des im Öl verdünnten Kraftstoffs durch Mittel zum Heizen dieses Öls, **dadurch gekennzeichnet, dass** die Heizmittel Mikrowellengeneratoren (66) umfassen, um das Öl auf intermittierende Weise zu heizen.
